# EUROPEAN PATENT APPLICATION

(11) **EP 4 826 135 A1**
(43) Date of publication of application: **21.10.2026**
(21) Application number: 26150211.6
(22) Date of filing: 05.01.2026
(51) Int. Cl.: C25B 9/75, C23C 8/24, C25B 9/77, H01M 8/0202, H01S 3/00, C08J 7/04, C25B 1/04

(54) **BIPOLAR PLATE, ELECTROCHEMICAL REACTION DEVICE AND PREPARATION METHOD**

(30) Priority: 17.04.2025 CN 202510486883
(71) Applicant: Sungrow Power Supply Co., Ltd., Hefei, Anhui 230088 (CN)
(72) Inventor: GARCIA TORREGROSA, Ivan, 1101 BV Amsterdam (NL); LIU, Fang, 81541 Munich (DE); ZHAO, Lin, Munich (DE)
(74) Representative: Rooney, John-Paul

(57) **Abstract**

The present disclosure provides a bipolar plate, an electrochemical reaction device and a preparation method, wherein the preparation method of the bipolar plate comprises: providing a cathode plate and an anode plate, aligning the cathode plate and the anode plate and applying pressure to keep the cathode plate and the anode plate in contact, and laser welding and laser nitriding the aligned plates under a nitrogen atmosphere.

## Description

### CROSS REFERENCE TO RELATED APPLICATIONS

This application claims the priority of Chinese Patent Application No. 202510486883.X, filed with the China National Intellectual Property Administration on April 17, 2025, and titled with "BIPOLAR PLATE, ELECTROCHEMICAL REACTION DEVICE AND PREPARATION METHOD".

### FIELD

The present disclosure relates to the technical field of electrochemical reaction devices, in particular to a bipolar plate, an electrochemical reaction device and a preparation method.

### BACKGROUND

Bipolar plates are the main component for manufacturing electrochemical reaction devices. The electrochemical reaction device may be a water electrolyzer (such as a PEM (proton exchange membrane) water electrolyzer) or a fuel cell. Improved bipolar plates are also needed to make electrochemical reaction devices, especially water electrolyzers or fuel cells, have higher application value and application economy.

### SUMMARY

Through a long-term study, the inventors unexpectedly found that the laser welding and the formation of a nitride protective layer can be realized in one step by laser-welding two metal plates under a nitrogen atmosphere.

Therefore, based on the above findings, in a first aspect, a method for preparing a bipolar plate for an electrochemical reaction device (for example, a water electrolyzer) is provided by the present disclosure, which comprises:
providing a cathode plate and an anode plate,
aligning the cathode plate and the anode plate and applying pressure to keep the cathode plate and the anode plate in contact, and
laser-welding the cathode plate and anode plate under a nitrogen atmosphere, to generate a nitride on the cathode plate and anode plate.

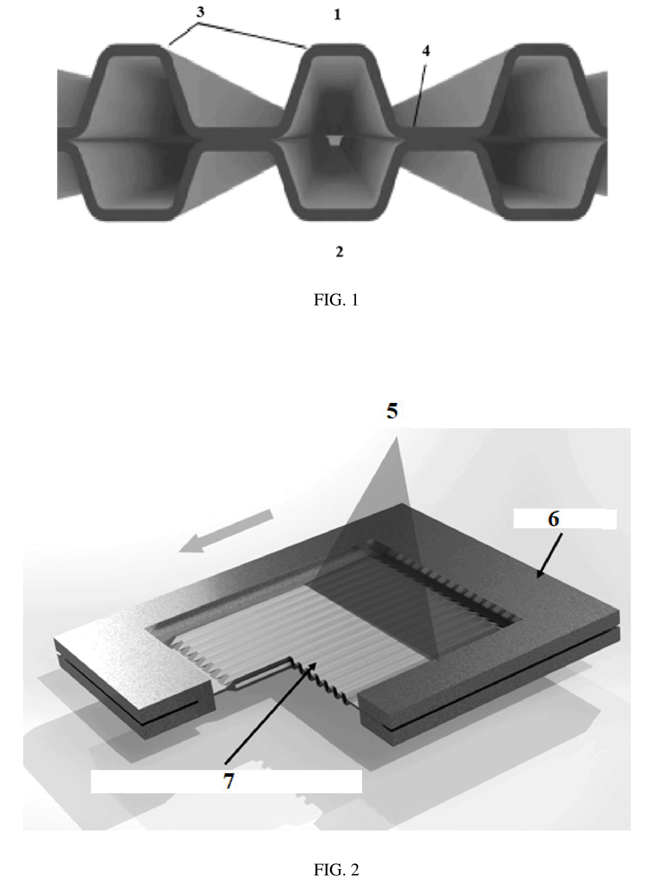

In some embodiments, the cathode plate is a metal plate having channels and/or lands; and/or the anode plate is a metal plate having channels and/or lands. With the above channels and/or lands, a flow field pattern can be formed on the cathode plate and/or the anode plate, and this flow field pattern can be realized by means of stamping, machining, etching, etc. In some embodiments, the cathode plate and the anode plate are aligned to keep the channels of the cathode plate and the channels of the anode plate in contact, and the cathode plate and the anode plate are aligned to keep the lands of the cathode plate and the lands of the anode plate in opposite positions, see FIG. 1.

In some embodiments, the material of the metal plate includes a titanium-based metal or stainless steel.

In some embodiments, a cathode plate and an anode plate are laser-welded in an airtight chamber filled with nitrogen gas, and a nitride is generated on the non-welded side of the cathode plate and the anode plate. The airtight chamber can completely isolate the gas exchange between the gas and the environment, or at least ensure that the gas in the environment cannot enter the airtight chamber. The airtight chamber can be in the form of a chamber or a container. For example, the airtight chamber can be filled with 90%, 95%, 96%, 97%, 98%, 99% or 100% of nitrogen gas, and the airtight chamber can also be additionally filled with other rare gases such as argon gas. For example, in order to ensure that ambient gas does not enter the airtight chamber, the intensity of pressure inside the airtight chamber can be greater than that outside the airtight chamber, for example, by at least 50 millibar, 100 millibar, 150 millibar, 200 millibar, 300 millibar, 400 millibar or 500 millibar.

In some embodiments, a cathode plate and an anode plate are laser-welded by using a laser source in a laser scanning mode, and a nitride is generated on the cathode plate and the anode plate, so that laser welding and laser nitriding are realized in one step.

In some embodiments, the laser scanning may be performed one or more times. For example, laser scanning is performed at least 2 times, 3 times, 4 times, 5 times, 6 times, 7 times, 8 times, 9 times, 10 times or more.

In some embodiments, laser welding and laser nitriding can be performed using a single laser source or a plurality of laser sources. For example, the plurality of laser sources is at least 2, 3, 4, 5 or more laser sources.

In some embodiments, the airtight chamber may be provided with a laser, for example, a diode fiber laser or an ultraviolet diode laser.

In some embodiments, a continuous wavelength laser source is used to project a rectangular pattern so that its longest side is perpendicular to the scanning direction, see FIG. 1.

In some embodiments, laser welding is performed using a pulsed laser source.

In some embodiments, after the cathode plate and the anode plate are aligned, a plate clamp is used to apply pressure to the cathode plate and the anode plate, for example, a titanium plate clamp is used to clamp the cathode plate and the anode plate.

In some embodiments, the laser parameters of the laser source are controlled so that the surface temperatures of the cathode plate and the anode plate are within a preset temperature range, such as 900°C to 2500°C, or 1000°C to 2200°C, or 1200°C to 2000°C.

In some embodiments, the laser source or the plate clamp moves along the direction of the channel at a relative speed of 0.5 mm/s to 20 mm/s, or 1 mm/s to 15 mm/s, or 2 mm/s to 10 mm/s.

In some embodiments, the moving speed of laser scanning is 2 mm/s to 10 mm/s, and the moving speed is relative to the scanning direction.

In another aspect of the present disclosure, a bipolar plate prepared using the method of the present disclosure is provided. In one embodiment, the bipolar plate is a titanium-based plate, such as a titanium alloy plate or a pure titanium plate, which has a nitride (e.g., titanium nitride (TiN)) protective layer. In one embodiment, the thickness of the nitride protective layer is 0.5 micron to 10 microns, such as 1 micron, 2 microns, 3 microns, 4 microns, 5 microns, 6 microns, 7 microns, 8 microns, 9 microns or 10 microns.

In another aspect of the present disclosure, an electrochemical reaction device (such as a water electrolyzer) is provided, which comprises a bipolar plate prepared by the method of the present disclosure. In some embodiments, the water electrolyzer comprises bipolar plates prepared by the method of the present disclosure and a porous transport layer, and a membrane assembly. In some embodiments, the water electrolyzer further comprises a sealing assembly located between the two bipolar plates.

In some embodiments, the membrane assembly comprises an anode, a cathode, and a selectively permeable membrane, such as a proton exchange membrane, disposed between the anode and the cathode.

In another aspect of the present disclosure, use of the bipolar plate of the present disclosure in preparing an electrochemical reaction device (for example, a water electrolyzer or a fuel cell) is provided.

In another aspect of the present disclosure, a method for preparing an electrochemical reaction device is provided, which comprises:
preparing a bipolar plate by method of the present disclosure, and
assembling an electrochemical reaction device by using the bipolar plate.

### BRIEF DESCRIPTION OF THE DRAWINGS

For more clearly illustrating the technical solutions in the present disclosure or the related art, the drawings for describing the present disclosure or the related art will be briefly described below. Apparently, the drawings in the following description only relate to some embodiments of the present disclosure, and other drawings may be obtained by those skilled in the art based on these drawings without any creative work.
FIG. 1 is a schematic cross-sectional view of a bipolar plate prepared according to an embodiment of the method of the present disclosure.
FIG. 2 is a schematic diagram of using a continuous wavelength laser source to project a rectangular pattern in one embodiment of the present disclosure, wherein the longest side of the rectangle is perpendicular to the scanning direction, 5 is a laser source, 6 is a plate clamp, and 7 is the aligned anode plate and cathode plate.
FIG. 3 is a schematic diagram of an embodiment of the method of the present disclosure, wherein a fiber laser is used to scan a rectangular area.
FIG. 4 is a schematic diagram of an embodiment of the method of the present disclosure, wherein the laser scanning direction and scanning area are shown.
FIG. 5 is a scanning electron microscope (SEM) photograph of the surface morphology of titanium nitride coating of the bipolar plate sample obtained according to Example 1 of the present disclosure.
FIG. 6 is a FIB-SEM (focused ion beam scanning electron microscope) cross-sectional view of titanium nitride coating of the bipolar plate sample obtained according to Example 1 of the present disclosure.
FIG. 7 is an X-ray diffraction pattern (XRD) of the crystalline phase analysis of titanium nitride coating of the bipolar plate sample obtained according to Example 1 of the present disclosure.
FIG. 8 is the result of polarization curve test of PEM water electrolyzer assembled according to Example 3 of the present disclosure, wherein thick lines represent laser nitrided titanium bipolar plates and thin lines represent platinum-coated titanium bipolar plates.
FIG. 9 is a spectrum of impedance test of PEM water electrolyzer assembled according to Example 3 of the present disclosure, in which thick lines represent laser nitrided titanium bipolar plates and thin lines represent platinum-coated titanium bipolar plates.

### DETAILED DESCRIPTION

Unless otherwise specified, the terms used in this specification and claims have the following meanings.

In the present disclosure, the terms "cathode plate" and "single cathode plate" have the same meaning, and the terms "anode plate" and "single anode plate" have the same meaning, meaning the electrode plate in the electrochemical reaction device.

In the present disclosure, a bipolar plate is composed of a cathode plate (single cathode plate) and an anode plate (single anode plate).

In the present disclosure, the cathode plate and/or the anode plate may be metal plates, such as alloy metal plates or single-metal metal plates. The material of the metal plate includes, for example, titanium, chromium, nickel, aluminum, tantalum, zirconium, tungsten, niobium, iron or alloys thereof. For example, materials of metal plates used as cathode plates and anode plates in the present disclosure are titanium-based metals or stainless steel. As used herein, titanium-based metal refers to titanium alloy or pure titanium. The thickness of the metal plate can be 10 µm to 1000 µm, such as 10 µm, 20 µm, 30 µm, 40 µm, 50 µm, 60 µm, 70 µm, 80 µm, 90 µm, 100 µm, 200 µm, 300 µm, 400 µm, 500 µm, 600 µm, 700 µm, 800 µm, 900 µm or 1000 µm, or a value between any two of the above, for example, 20 µm to 500 µm, 20 µm to 400 µm, 30 µm to 300 µm, 30 µm to 250 µm, 40 µm to 250 µm, 50 µm to 200 µm, 50 µm to 150 µm or 70 µm to 100 µm. The thickness of the metal plate can also be greater than 1 mm, such as 1 mm, 2 mm, 3 mm, 4 mm, 5 mm, 6 mm, 7 mm, 8 mm, 9 mm or 10 mm, or a value between any two of the above.

In the present disclosure, a nitrogen atmosphere refers to an atmosphere having nitrogen gas as a basic component, and the nitrogen atmosphere comprises substantially no oxygen gas, for example, less than 5%, 4%, 3%, 2% or 1% of oxygen gas. For example, the nitrogen atmosphere is substantially pure nitrogen gas, for example, the nitrogen atmosphere comprises at least 95%, 96%, 97%, 98% or 99% of nitrogen gas. The nitrogen atmosphere may comprise nitrogen gas and an optional rare gas, such as argon gas.

In the present disclosure, "airtight chamber" means a space isolated from the external environment. In other words, in the process of implementing the method of the present disclosure, gas communication between the airtight chamber and the external environment is avoided, or at least gas is prevented from entering the airtight chamber from the external environment. The airtight chamber can exist in the form of a cavity or a container. For example, the airtight chamber can be filled with 90%, 95%, 96%, 97%, 98%, 99% or 100% of nitrogen gas, and the airtight chamber can also be additionally filled with rare gas such as argon gas. For example, in order to ensure that ambient gas does not enter the airtight chamber, the intensity of pressure inside the airtight chamber can be greater than that outside the airtight chamber, for example, by at least 50 millibar, 100 millibar, 150 millibar, 200 millibar, 300 millibar, 400 millibar or 500 millibar.

In the present disclosure, the channel means a groove, and in some embodiments of the present disclosure, the channels of the cathode plate and the anode plate are in contact with each other, see FIG. 1.

In the present disclosure, land means a relatively raised portion. In some embodiments of the present disclosure, the cathode plate and the anode plate are aligned to keep the lands of the cathode plate and the lands of the anode plate in opposite positions, see FIG. 1. In FIG. 1, 1 denotes cathode plate (single cathode plate), 2 denotes anode plate (single anode plate), 3 denotes lands and 4 denotes channels.

In the present disclosure, "flow field" refers to the channels on the cathode plate and anode plate which are defined by channels, lands and other components in the electrochemical reaction device, which allow electrolytes, reactants, products, etc. to flow through and presents a specific pattern, and the lands provide mechanical support for other components and transmit electrons and heat.

In the present disclosure, the flow field pattern can be formed by stamping, machining, etching, etc., for example, by stamping.

In the present disclosure, the selectively permeable membrane refers to a membrane separating a cathode and an anode in an electrochemical reaction device, which allows specific ions to pass through, but does not allow other substances in the reaction system to pass through. Examples of selectively permeable membranes include proton exchange membranes (such as perfluorosulfonic acid membranes, Nafion membranes) and anion exchange membranes.

In the description of this specification, description relating to terms "some embodiments", "some examples", "for example" or "an embodiment" etc. means that a specific feature, structure, material, or characteristic described in conjunction with embodiment or example is included in at least one embodiment or example of the present disclosure. In this specification, the above terms are schematic. In addition, the described specific feature, structure, material, or characteristic may be combined in any one or more embodiments or examples in an appropriate manner. In addition, those skilled in the art can combine different embodiments or examples described in this specification and combine features of different embodiments or examples, unless they are contradictory.

For better illustrating the technical means and effects of the present disclosure, hereinafter, the present disclosure will be further described in detail in conjunction with non-limiting examples. Embodiments of the present disclosure (including descriptions provided in the embodiments) are intended to illustrate embodiments of the present disclosure and are not intended to limit the scope of any claims. According to the present disclosure, those skilled in the art will understand that many changes can be made to the disclosed specific embodiments and the same or similar results will still be obtained without departing from the spirit and scope of the present disclosure.

In a first aspect, a method for preparing a bipolar plate for an electrochemical reaction device (e.g., a water electrolyzer and a fuel cell) is provided by the present disclosure, which comprises:
providing a cathode plate and an anode plate,
aligning the cathode plate and the anode plate and applying pressure to keep the cathode plate and the anode plate in contact, and
laser-welding the cathode plate and anode plate under a nitrogen atmosphere, to generate a nitride on the cathode plate and anode plate.

In some embodiments, the cathode plate is a metal plate having channels and/or lands, and/or the anode plate is a metal plate having channels and/or lands. The material of the metal plate can be, for example, titanium-based metal or stainless steel. The above channels and/or lands can form a flow field pattern on the cathode plate and/or the anode plate, and this flow field pattern can be realized by stamping, machining, etching, etc. In some embodiments, the cathode plate and the anode plate are aligned to keep the channels of the cathode plate and the channels of the anode plate in contact, and the cathode plate and the anode plate are aligned to keep the lands of the cathode plate and the lands of the anode plate in opposite positions, see FIG. 1.

The flow field pattern can be obtained mechanically by rotating tools or chemically by acid etching. However, the above-mentioned mechanical and chemical methods of metal plates may lead to the disadvantages of high cost and low yield. In addition, acid etching also has environmental problems. The preferred flow field pattern processing method is stamping, for example, placing a single electrode plate in a mold and stamping under a certain pressure (for example, 2000 KN/cm² to 6000 KN/cm²). Stamping is an ideal choice for large-scale manufacturing of bipolar plates due to the advantages of very high yield and low cost. Stamping can be used for a very thin substrate plate, for example, a substrate plate of about 0.5 mm or less. The light weight of electrochemical components is conducive to realize large-scale production and assembly.

Metal materials, such as titanium-based metal materials and stainless steel, can be used for the single electrode plate and bipolar plate in the present disclosure. Because titanium material has good corrosion resistance, it will not pollute the selectively permeable membrane such as proton exchange membrane in the working environment of a bipolar plate of an electrolytic water device or a fuel cell (for example, 80°C, pH=3).

In the case of a titanium-based plate composed of a titanium alloy, the proportion of titanium in the alloy may be greater than 75%, greater than 80%, greater than 85%, greater than 90% or even greater than 95% by mass.

In addition, the alloy material may be an alloy composed of primary component elements and secondary component elements. For example, the primary component element is titanium, and the secondary component element is selected from the group consisting of tungsten, molybdenum, zirconium, chromium, niobium, vanadium, iron, silicon, carbon, other trace impurities, and a combination thereof.

In some embodiments, a cathode plate and an anode plate are laser-welded in an airtight chamber filled with nitrogen gas, and a nitride is generated on the cathode plate and the anode plate. The airtight chamber can completely isolate the gas exchange between the gas and the environment, or at least ensure that the gas in the environment cannot enter the airtight chamber. For example, the intensity of pressure inside the airtight chamber is greater than that outside the airtight chamber.

In some embodiments, the cathode plate and the anode plate are laser-welded by means of laser scanning using a laser source, and nitrides are generated on the cathode plate and the anode plate. For example, the laser parameters of the laser source can be controlled so that the surface temperatures of the cathode plate and the anode plate are within the preset temperature ranges of 900°C to 2500°C, 1000°C to 2200°C, 1200°C to 2000°C, or 1400°C to 1800°C.

In some specific embodiments, laser welding and laser nitriding are performed using a single laser source or a plurality of laser sources; for example, 2, 3, 4 or more laser sources can be used.

When laser welding and laser nitriding are performed by laser scanning, laser scanning can be performed once or more times; for example, laser scanning can be performed at least 2 times, 3 times, 4 times, 5 times or more. The moving speed of laser scanning can be 0.5 mm/s to 20 mm/s, 1 mm/s to 15 mm/s, or 2 mm/s to 10 mm/s.

In some specific embodiments, a continuous wavelength laser source is used to project a rectangular pattern so that its longest side is perpendicular to the scanning direction; or a pulsed laser source may be used.

In the method of the present disclosure, the laser may be generated by a suitable laser source, such as a diode fiber laser or an ultraviolet diode laser. In an embodiment, a suitable laser source is arranged in an airtight chamber.

The laser may have a wavelength or an average wavelength of 800 nm to 1200 nm, 400 nm to 550 nm, or 450 nm to 500 nm. The power of the laser can be 10 W to 2000 W, 50 W to 1000 W, for example, 50 W to 700 W.

In the present disclosure, the laser source used in the laser welding method can be a continuous-wavelength laser source or a pulsed laser source. Alternatively, the laser used in the laser welding method can work in continuous or pulsed mode. Continuous laser has simple equipment and rapid processing process, but it is difficult to control the temperature, which is more suitable for thicker materials, such as materials with a thickness greater than 1 mm. In this mode, the laser beam can form a certain shape (for example, rectangular shape) and be projected on the surface of the sample, and the scanning can be completed by moving the laser head or the welding clamp, or by moving the laser head and the welding clamp towards each other (in opposite directions). When using pulsed laser processing, the laser head and welding clamp can remain stationary, and the vibrating mirror system integrated in the laser head can project the required shape along the surface to complete scanning. The surface temperature of the sample can be well controlled by using pulsed laser, which is especially suitable for thin samples, such as bipolar plates with a thickness less than 1 mm.

In an embodiment, the parameters of continuous laser welding includes that the laser is a single-mode laser, the defocus is 0, the welding speed is 4 mm/s to 20 mm/s, for example, 6 mm/s to 12 mm/s, and the laser power is 50 W/cm² to 1000 W/cm², for example, 100 W/cm² to 200 W/cm².

In some embodiments of the method of the present disclosure, the cathode plate and the anode plate can be clamped by a clamp to apply pressure to the cathode plate and the anode plate by the clamp. For example, two single electrode plates are aligned and placed on a welding clamp, and the two single electrode plates are clamped in a single-sided or double-sided clamping manner during the welding process. For example, see FIG. 2, in which 5 is a laser source, 6 is a clamp, and 7 is an aligned cathode plate and an anode plate.

In laser continuous welding, a clamp is customized according to the manufactured bipolar plate, and the welding clamp presses the bipolar plate, so that the welding area is closely attached.

Through the method of the present disclosure, two steps of forming a nitride protective layer and laser welding can be combined into one step, that is, laser treatment can be used under a nitrogen atmosphere to weld two single electrode plates together meanwhile forming a nitride protective layer on the surface of a metal plate. Before laser treatment, the surface of the electrode plate can be cleaned only by common solvents, such as acetone, ethanol, isopropanol, etc., to remove the residual lubricant and the like on the surface in the process of the front processing. However, there is no need to adopt an additional pretreatment process to remove the oxide layer on the surface, in which the pretreatment process usually comprises degreasing, descaling and deoxidation of the single electrode plate by using processes such as acid solution cleaning, plasma cleaning, or polishing.

In the present disclosure, a metal bipolar plate is obtained by welding an anode plate and a cathode plate, both of which may be provided with flow field areas, and the electrode plates are provided with fluid channels, and a coolant flow field may be formed in a closed area between their lands after the anode plate and the cathode plate are combined.

In another aspect of the present disclosure, a bipolar plate prepared using the method of the present disclosure is provided. In an embodiment, the bipolar plate is a titanium-based plate, such as a titanium alloy plate or a pure titanium plate, which has a nitride (e.g., titanium nitride (TiN)) protective layer. In an embodiment, the thickness of the nitride protective layer is 0.5 micron to 10 microns, such as 1 micron, 2 microns, 3 microns, 4 microns, 5 microns, 6 microns, 7 microns, 8 microns, 9 microns or 10 microns.

In another aspect of the present disclosure, an electrochemical reaction device (such as a water electrolyzer and a fuel cell) is provided, which comprises a bipolar plate prepared by the method of the present disclosure. In some embodiments, the water electrolyzer comprises bipolar plates prepared by the method of the present disclosure and a porous transport layer, and a membrane assembly. In some embodiments, the water electrolyzer further comprises a sealing assembly located between the two bipolar plates.

In some embodiments, the membrane assembly comprises an anode, a cathode, and a selectively permeable membrane, such as a proton exchange membrane, disposed between the anode and the cathode.

In another aspect of the present disclosure, use of the bipolar plate of the present disclosure in preparing an electrochemical reaction device (for example, a water electrolyzer or a fuel cell) is provided, and a method for preparing the electrochemical reaction device is also provided, which comprises:
preparing a bipolar plate by the method of the present disclose, and
assembling an electrochemical reaction device by using the bipolar plate.

The technical solutions of the present disclosure have achieved at least one of the following beneficial effects:
1. By this method, both the cathode plate and the anode plate are connected via laser welding and laser nitriding in a single step or in an integrated step, which means that laser welding and laser nitriding can be performed at the same time.
2. This method can realize fast processing. By this method, laser welding and laser nitriding can usually be performed in less than 1 minute, which minimizes the space used in the factory.
3. By this method, a ready-to-use plate can be provided. Unlike the process in the related art, the bipolar plate manufactured by this method can be directly used in electrochemical reaction devices (for example, electrolytic cells or fuel cells), or can be directly coated with precious metals without any pretreatment or cleaning steps.
4. By this method, a high-quality nitride protective layer (such as a TiN layer) can be formed. In particular, the obtained TiN layer is highly crystalline and conformal. The TiN layer is mainly composed of osbornite (stoichiometric TiN), and its thickness can vary from 0.5 micron to 10 microns. The following examples of the present disclosure take a titanium-based plate as an example, and the effect of the method is illustrated through the preparation, morphology and element abundance test, crystal phase analysis and electrochemical test of bipolar plates. But this does not mean that titanium-based plate and corresponding TiN protective layer are the only feasible solutions. In fact, the method of the present disclosure can be also used for other metals to form corresponding nitride protection layers to achieve the same purpose.
5. This method can be applied on a large scale, because it can be combined with stamping and other processes in a coordinated manner with the least manual intervention.

### Example

### Example 1 preparation of bipolar plate

Two titanium-metal single electrode plates which have been processed in flow field (with preformed lands and channels) were taken as cathode plate and anode plate respectively.

The bottoms of the two plates were aligned such that the channels of the cathode plate were in contact with those of the anode plate. A clamp was used to apply pressure to ensure good contact between the two plates. Each single electrode plate had a thickness of 1 mm. The clamped bipolar plates were then placed under a laser head, and in this case, the whole laser, clamp and sample were all within an airtight chamber.

Nitrogen gas with purity of 99.999% was introduced into the airtight chamber, and the intensity of pressure of nitrogen gas was kept 120 mbar higher than the ambient intensity of pressure.

The welding and surface nitriding of two bipolar plates were completed simultaneously by using diode laser head with rectangular laser beam at the scanning rate of 4 mm/s for a single scanning, and controlling the surface temperature at 1500°C to 1700°C.

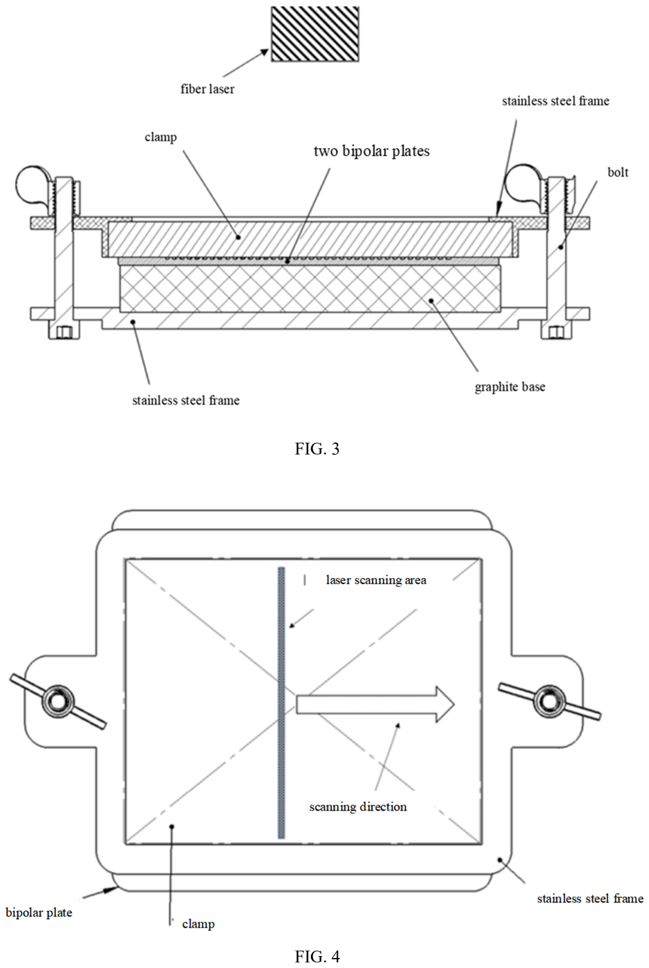

With regard to the preparation method of Example 1, refer to FIG. 3 and FIG.4, in which, FIG. 3 shows the positional relationship among the bipolar plate, the frame, the clamp, the base, the bolt and the like used in the method, and the laser scans a rectangular area. FIG. 4 shows the laser scanning area and scanning direction.

### Example 2 morphology and element abundance test of a bipolar plate

The morphology and element abundance of the bipolar plate prepared in Example 1 were tested.

### 1. Surface morphology

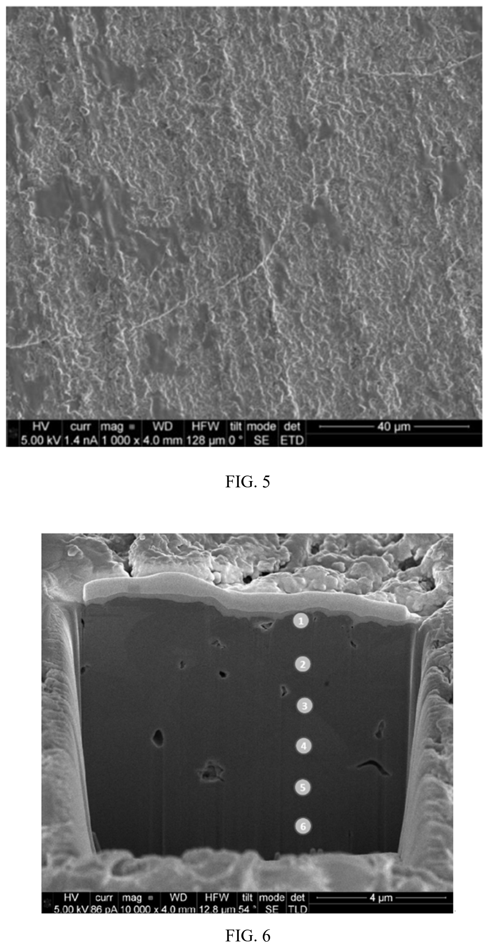

FIG. 5 is a scanning electron microscope (SEM) photograph of the surface morphology of the titanium nitride coating of the bipolar plate sample obtained according to Example 1 of the present disclosure. As shown in FIG. 5, it can be seen that the surface coating is uniform, dense, flat and without obvious defects.

FIG. 6 is the cross-sectional view of the coating obtained by FIB (focused ion beam) technology. It can be seen that although there are a few holes in some areas, the coating is well combined with the substrate without obvious delamination.

### 2. Element abundance test

The surface analysis of the coating material at about 6 microns down from the surface layer was performed by using EDX technology. Six points were tested in sequence from the outside to the inside (see FIG. 6), and the abundance of nitrogen element was as follows: it gradually decreased from saturation at the outermost layer to 80% at 5 micrometers and 44% at 6 micrometers.

Table 1 shows the nitrogen abundance at six sampling points of the FIB-SEM cross-sectional view in FIG. 6, which is the data obtained by EDX analysis.

**Table 1**

| Test point | Depth | Tested N element |
|---|---|---|
| 1 | 1 µm | 100 % Saturated |
| 2 | 2 µm | 100 % Saturated |
| 3 | 3 µm | 100 % Saturated |
| 4 | 4 µm | 83 % |
| 5 | 5 µm | 80 % |
| 6 | 6 µm | 44 % |

As mentioned above, the nitriding process is accompanied by the diffusion of nitrogen gas into the titanium substrate, resulting in the in-situ formation of titanium nitride, so the abundance of nitrogen element gradually decreases from the outside to the inside.

### 3. Crystalline phase analysis of surface coating

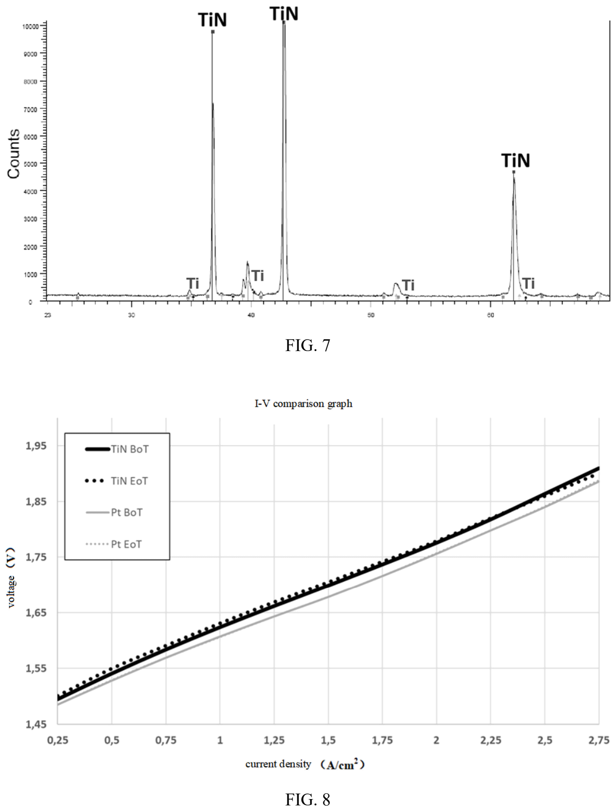

The crystalline phase of the surface coating of the sample prepared in Example 1 was analyzed by the X-ray diffraction (XRD). XRD diagram of the titanium bipolar plate was obtained, as shown in FIG. 7. It can be seen that the characteristic peaks of titanium metal as the substrate are relatively small, indicating that the surface coating is relatively thick, probably more than 10 microns. Several main peaks in the spectrum correspond to TiN, and the mass ratio is greater than 75%, which is the main crystalline phase composition of the coating. However, other stoichiometric titanium nitride, such as α-TiN_{0.3} and Ti₂N, accounts for a relatively small proportion and is not the main crystalline phase.

Table 2 below shows the results of crystalline phase analysis of the surface coating of the sample prepared in Example 1.

**Table 2: Crystalline phase analysis based on XRD spectrum of FIG. 7**

| Sample | TiN (osbornite) | Ti₂N | α-TiN_{0.3} | **Ti** metal |
|---|---|---|---|---|
| Newly formed coating | ~ 78 % | 3% | ~19 % | ≤ 1 % |

Therefore, it can be confirmed that titanium nitride with in-situ growth, uniform distribution and high stoichiometric ratio can be obtained by this process.

### Example 3 assemble of PEM water electrolyzer and electrochemical test

The bipolar plate obtained in Example 1 was assembled into a PEM water electrolyzer, and the electrochemical test was performed for a total time of 200 h.

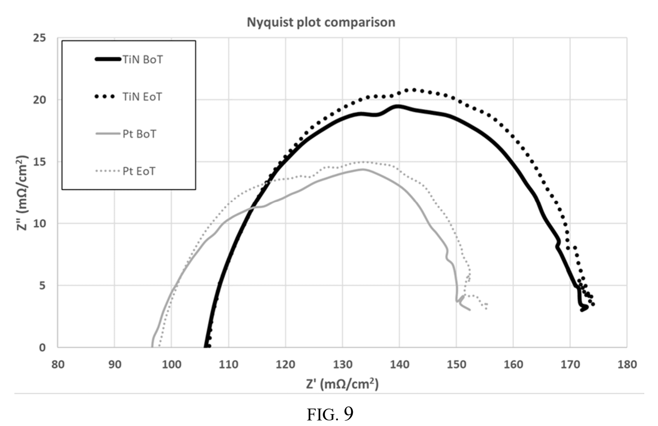

Under the same conditions, the bipolar plate with the surface coated with platinum was also used as a reference sample for testing. In which, FIG. 8 shows the polarization curve, and FIG. 9 shows the impedance spectrum.

In FIG. 8, thick lines represent laser-nitrided titanium bipolar plates; and thin lines represent platinum-coated titanium bipolar plates. Except for the bipolar plate, the components and test conditions of the water electrolyzer are exactly the same. Temperature: 75°C, and except for the polarization curve and impedance diagram, the water electrolyzer was kept running at 3 A/cm² for 180 hours. BoT: beginning of test; EoT: end of test.

FIG. 9 shows the impedance spectrum of the PEM water electrolyzer at 0.5 A/cm². The thick lines represent the laser nitrided titanium bipolar plate, and the thin lines represent the platinum-coated titanium bipolar plate. Other conditions are the same as in FIG. 8.

From the polarization curve (FIG. 8) and impedance spectrum (FIG. 9), it can be seen that the ohmic resistance of the water electrolyzer has not changed significantly within 180 hours. According to previous literature reports, the titanium plate without effective protective layer will be obviously corroded in 50 hours' test meanwhile the ohmic resistance of water electrolyzer will be significantly increased. Therefore, the experimental data show that titanium nitride coating can effectively protect titanium bipolar plate, which is similar to platinum-coated bipolar plate.

## Claims

1. A method for preparing a bipolar plate, **characterized in that** it comprises:
providing a cathode plate and an anode plate;
aligning the cathode plate and the anode plate and applying pressure to keep the cathode plate and the anode plate in contact; and
laser-welding the cathode plate and the anode plate under a nitrogen atmosphere, to generate a nitride on the cathode plate and the anode plate.

2. The method according to claim 1, **characterized in that** the cathode plate is a metal plate having channels and/or lands; and/or, the anode plate is a metal plate having channels and/or lands.

3. The method according to claim 2, **characterized in that** the material of the metal plate includes titanium-based metal or stainless steel.

4. The method according to claim 2, **characterized in that** the metal plate is a titanium plate.

5. The method according to claim 2, **characterized in that** the metal plate is composed of a titanium alloy, and the proportion of titanium in the alloy is greater than 75%, greater than 80%, greater than 85%, greater than 90% or even greater than 95% by mass.

6. The method according to claim 2, **characterized in that** the titanium alloy contains a secondary component element selected from the group consisting of tungsten, molybdenum, zirconium, chromium, niobium, vanadium, iron, silicon, carbon, other trace impurities, and a combination thereof.

7. The method according to any one of claims 1 to 6, **characterized in that** the cathode plate and the anode plate are laser-welded in an airtight chamber filled with nitrogen gas, and a nitride is generated on the cathode plate and the anode plate, wherein the intensity of pressure inside the airtight chamber is greater than that outside the airtight chamber.

8. The method according to any one of claims 1 to 7, **characterized in that** the cathode plate and the anode plate are laser-welded by using a laser source in a laser scanning mode, and a nitride is generated on the cathode plate and the anode plate.

9. The method according to claim 8, **characterized in that** the laser source is a continuous-wavelength laser source or a pulsed laser source.

10. The method according to claim 8 or 9, **characterized in that** the laser source is a diode fiber laser or an ultraviolet diode laser.

11. The method according to any one of claims 8 to 10, **characterized in that** the laser source is arranged in an airtight chamber.

12. The method according to any one of claims 8 to 11, **characterized in that** the laser has a wavelength of 800 nm to 1200 nm.

13. The method according to any one of claims 8 to 12, **characterized in that** the method further comprises: controlling the laser parameters of the laser source so that the surface temperatures of the cathode plate and the anode plate are within a preset temperature range of 900°C to 2500°C.

14. The method according to any one of claims 1 to 13, **characterized in that** pressure is applied to the cathode plate and the anode plate by a plate clamp.

15. A method for preparing an electrochemical reaction device, **characterized in that** it comprises:
preparing a bipolar plate by the method according to any one of claims 1 to 14; and
assembling the electrochemical reaction device by using the bipolar plate.
